# EUROPÄISCHE PATENTSCHRIFT

(11) **EP 1 148 610 B1**
(45) Veröffentlichungstag und Bekanntmachung des Hinweises auf die Patenterteilung: **10.01.2007**
(21) Anmeldenummer: 01107333.5
(22) Anmeldetag: 24.03.2001
(51) Int. Cl.: H02J 7/00

(54) **Fremdstarteinrichtung**
Jump starting device
Dispositif pour le démarrage assisté

(30) Priorität: 20.04.2000 DE 10019588
(43) Veröffentlichungstag der Anmeldung: 24.10.2001
(73) Patentinhaber: Bayerische Motoren Werke Aktiengesellschaft, 80809 München (DE)
(72) Erfinder: Wagner, Armin, 85757 Karlsfeld (DE)

(56) Entgegenhaltungen:
- US-A- 3 673 486
- US-A- 4 185 204

## Beschreibung

Die Erfindung betrifft eine Fremdstarteinrichtung gemäß dem Oberbegriff des Anspruchs 1.

Immer wieder kommt es vor, dass die Batterie eines Fahrzeuges entladen ist, so dass das Fahrzeug nicht betrieben, insbesondere gestartet, werden kann. In diesem Zusammenhang ist es bekannt, das Fahrzeug mittels einer Fremdstarteinrichtung zu starten. Beispielsweise wird das Fahrzeug zu diesem Zweck mit einem anderen Fahrzeug zusammengeschlossen. Ferner gibt es auch separate Fremdstarthilfen, die an ein liegengebliebenes Fahrzeug anschließbar sind.

Bei den meisten, insbesondere bei älteren Fahrzeugmodellen ist es üblich, Fremdstartkabel direkt an den Polen der Batterie anzuschließen. Allerdings werden die Batterien zunehmend - aus unterschiedlichen Gründen - an mehr oder minder unzugänglichen Stellen im Fahrzeug verbaut. Aus diesem Grunde ist es bekannt, Fremdstartstützpunkte leicht zugänglich im Fahrzeug anzuordnen, so dass ein Fremdstartvorgang einfach und ohne separate Ausbaumaßnahmen durchführbar ist.

Aus der US-A-4 185 204 ist eine Fremdstarteinrichtung für ein Kraftfahrzeug mit einem Generator, einem Anlasser, einer Batterie und einem Fremdstartstützpunkt bekannt, der separat von der Batterie im Fahrzeug angeordnet ist. Der Fremdstartstützpunkt ist direkt mit dem Anlasser verbunden.

Bei einem solchen Stand der Technik hat sich ein bestimmtes Problem gezeigt. Bei einem Fremdstartvorgang muss immer ein ausreichender Verpolungsschutz für die Steuergeräte eines Fahrzeuges gewährleistet sein. Dahinter steckt der Gedanke, dass Fahrzeuge eine versehentliche Verpolung der Starthilfekabel unbeschadet überstehen sollten. Solange Kraftfahrzeuge Elektroniken umfaßten, die Lastteile besaßen, welche meist aus Relais bestanden, war diese Anforderung ohne weiteres erfüllbar. Allerdings sind in den letzten Jahren vermehrt Leistungshalbleiter zum Einsatz gelangt. Diese Leistungshalbleiter haben den Nachteil, dass bei einer Verpolung die Substratdiode leitend wird, was physikalisch begründet ist.

Durch die Anordnung des Fremdstartstützpunktes direkt am Anlasser, ist es notwendig, bei der Verwendung von Leistungshalbleitern zusätzliche Bauteile für den Verpolungsschutz im Fahrzeug zu verbauen. Dies verursacht Kosten und vermindert die Versorgungsspannung, da durch die Verpolschutzmaßnahme Leistung verloren geht. Beispielsweise vermindert sich der Wirkungsgrad eines Elektroniklüfters für den Antriebsmotors um bis zu 5 Prozent. Darüber hinaus reduzieren diese zusätzlichen Bauteile die Zuverlässigkeit der Elektroniken.

Aufgabe der vorliegenden Erfindung ist es, eine Fremdstarteinrichtung mit einem Verpolungsschutz anzugeben, bei der keine zusätzlichen Bauteile eingebaut werden müssen.

Diese Aufgabe wird durch die im Anspruch 1 genannten Merkmale gelöst.

Demgemäß ist es ein wesentlicher Gedanke der vorliegenden Erfindung, den Fremdstartstützpunkt für den Pluspol direkt am Generator anzuschließen. Der Generator umfaßt Dioden welche die Spannung im Verpolungsfall begrenzen (beispielsweise auf 2,5 V). Im Übrigen ist die Verbindung zwischen Generator und Anlasser bereits bisher so ausgelegt, dass die Zuführung des Anlasserstromes vom Generator zum Anlasser möglich ist. Unter Ausnutzung der Innenwiderstände in den Plusleitungen, sowie der Spannungsbegrenzungseinrichtung im Generator, kann daher im Verpolfall eine Überspannung an Elektronikteilen im Fahrzeug vermieden werden, ohne dass zusätzliche Vorrichtungen notwendig sind.

Der Generator ist gemäß Anspruch 1 über den Anlasser und die Batterie mit zumindest einem Elektronikteil verbunden. Somit kommen möglichst viele Innenwiderstände in den Plusleitungen zum Tragen.

Nachfolgend wird ein Ausführungsbeispiel der vorliegenden Erfindung mit Bezug auf die beiliegenden Zeichnungen näher erläutert. Die Zeichnungen zeigen in
- Figur 1: ein schematisches Schaltdiagramm einer Ausführungsform der vorliegenden Erfindung und
- Figur 2: ein schematisches Schaltdiagramm einer Ausführungsform gemäß dem Stand der Technik.

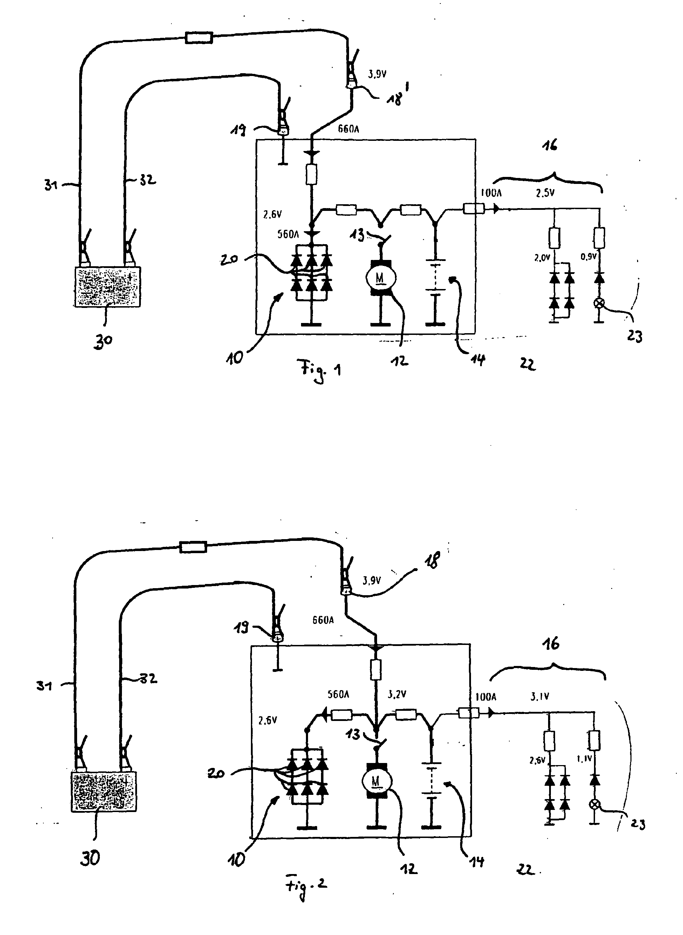

Eine herkömmliche Ausführungsform gemäß dem Stand der Technik ist in Figur 2 dargestellt. Demgemäß sind in einem nicht dargestellten Fahrzeug ein Generator 10, ein Anlasser 12 und eine Batterie 14 vorgesehen, die untereinander über Leitungen, beispielsweise mit einem Querschnitt von 35 mm², verbunden sind.

Alle in Figur 2 gezeigten Widerstände bezeichnen Innenwiderstände in den Plusleitungen.

Im Fahrzeug sind ferner zwei Fremdstartstützpunkte 18 und 19 leicht erreichbar angeordnet. Der Fremdstartstützpunkt 18 dient als Pluspol-Anschluss, der Fremdstartstützpunkt 19 als Minuspol-Anschluss.

Von der Batterie 14 geht eine Versorgungsleitung für die im Fahrzeug befindlichen Elektronikteile 16 ab. Vorliegend sind zwei Elektronikteile 16 vorgestellt, wobei ein erstes Elektronikteil eine Leistungselektronik mit einem Leistungshalbleiter 22 umfasst und mit einem weiteren Elektronikteil eine Lampe 23 angesteuert wird.

Für den Fall, dass die Batterie 14 entladen ist, kann das Fahrzeug über eine Fremdstarteinrichtung 30 unter Zwischenschaltung von Starthilfekabeln 31 und 32 betrieben, z.B. gestartet, werden. Im vorliegenden Fall ist bei den Starthilfekabeln 31 eine Verpolung dargestellt. Ferner ist der Fremdstartstützpunkt 18 für den Pluspol direkt am Anlasser 12 angeschlossen. Der Anlasser 12 kann über einen Anlassschalter 13 aktiviert werden.

In Figur 2 sind im Verpolfall der herkömmlichen Fremdstarteinrichtung die auftretenden Spannungen und Ströme dargestellt. Beispielsweise liegen am Fremdstartstützpunkt 18 für den Pluspol 3,9 V an, und es fließen etwa 660 A im Verpolfall durch die Starthilfekabel 31, 32. Am Anlasser 12 liegen noch 3,2 V und am Generator noch 2,6 V an. Die Differenz zu der Spannung am Pluspol ergibt sich über die zwischengeschalteten Innenwiderstände der Leitungen. An den Elektronikteilen liegen zwischen 3,1 V und 1,1 V an. 3,1 V wären für den Leistungshalbleiter 22 im Leistungsteil der ersten Elektronik jedoch zu hoch, so dass hier eine Beschädigung auftreten kann. Aus diesem Grunde, muß bei der Ausführungsform gemäß der Figur 2 noch ein zusätzliches Bauteil zur Gewährleistung eines Verpolungsschutzes vorgesehen werden, was vorliegend nicht dargestellt, jedoch aus dem Stand der Technik allgemein bekannt ist.

Dieses Problem verhindert man mit einer Fremdstarteinrichtung gemäß der vorliegenden Erfindung, von der ein Ausführungsbeispiel in Figur 1 dargestellt ist. Dabei bezeichnen gleiche Bezugszeichen gleiche Bauteile. Es ist wiederum eine Verpolung bei den Starthilfekabeln 31 und 32 dargestellt.

Der Unterschied zwischen den Ausführungsbeispielen in Figur 1 und Figur 2 besteht lediglich darin, dass der Fremdstartstützpunkt 18' nunmehr nicht mit dem Anlasser 12, sondern unmittelbar mit dem Generator 10 verbunden ist. Durch die im Generator vorhandenen Dioden 20 läßt sich die Spannung im Verpolungsfall auf etwa 2,5 V begrenzen. Damit kann auch an den Elektronikteilen 16 keine größere Spannung als 2,5 V anliegen. Unter Berücksichtigung der Innenwiderstände würde sich die Spannung sogar noch niedriger halten lassen.

Damit ist sichergestellt, dass am Leistungshalbleiter 22 des Elektronikteils keine Überspannung vorliegt, wodurch auf ein zusätzliches Bauteil zur Sicherstellung eines Verpolungsschutzes verzichtet werden kann. Vielmehr werden die im Generator vorhanden Dioden als Verpolungssicherung genutzt. Zudem trägt die in Figur 1 dargestellte Verschaltung, nämlich eine Verbindung des Generators über den Anlasser und die Batterie mit den Elektronikteilen 16 dazu bei, dass die Innenwiderstände ebenfalls im Sinne einer Spannungsreduzierung wirken.

## Patentansprüche

1. Fremdstarteinrichtung für ein Kraftfahrzeug mit einem Generator (10), einem Anlasser (12), einer Batterie (14), zumindest einem Elektronikteil (16) umfassend einen Leistungshalbleiter (22) und zumindest einem Fremdstartstützpunkt (18), der separat von der Batterie (14) im Fahrzeug angeordnet ist,
**dadurch gekennzeichnet,**
**dass** der Fremdstartstützpunkt (18) für den Pluspol unmittelbar mit dem Generator (10) verbunden ist,
**dass** der Generator (10) Dioden (20) umfasst, und
**dass** der Generator (10) über den Anlasser (12) und die Batterie (14) mit dem zumindest einen Elektronikteil (16) verbunden ist.

## Claims

1. A jump starting device for a motor vehicle with a generator (10), a starter (12), a battery (14), at least one electronic part (16) comprising a power semiconductor (22) and at least one jump starting support point (18), which is arranged separately from the battery (14) in the vehicle, **characterised in that** the jump starting support point (18) for the positive pole is connected directly to the generator (10), **in that** the generator (10) comprises diodes (20) and **in that** the generator (10) is connected via the starter (12) and the battery (14) to the at least one electronic part (16).

## Revendications

1. Dispositif d'assistance au démarrage pour un véhicule automobile présentant un générateur (10), un démarreur (12), une batterie (14), au moins une partie d'électronique (16) comprenant un semi-conducteur de puissance (22) et au moins un point d'application de l'assistance au démarrage (18) monté dans le véhicule mais séparé de la batterie (14),
**caractérisé en ce que**
le point d'application de l'assistance au démarrage (18) pour le pôle positif, est relié directement au générateur (10),
le générateur (10) comprend des diodes (20),
le générateur (10) est relié à au moins une partie d'électronique (16) par le démarreur (12) et par la batterie (14).
